# NEUE EUROPÄISCHE PATENTSCHRIFT

(11) **EP 2 264 346 B2**
(45) Veröffentlichungstag und Bekanntmachung des Hinweises auf die Entscheidung über den Einspruch: **24.08.2016**
(45) Hinweis auf die Patenterteilung: 02.01.2013
(21) Anmeldenummer: 09162814.9
(22) Anmeldetag: 16.06.2009
(51) Int. Cl.: F16K 31/60, F16K 35/02

(54) **Betätigungsvorrichtung zur Betätigung von Ventilen**
Actuation device for actuating valves
Dispositif d'actionnement destiné à l'actionnement de soupapes

(43) Veröffentlichungstag der Anmeldung: 22.12.2010
(60) Teilanmeldung: 12160761.8
(73) Patentinhaber: Georg Fischer Rohrleitungssysteme AG, 8201 Schaffhausen (CH)
(72) Erfinder: Stumpp, Jürgen, 79771 Klettgau (DE); Bürgi, Stefan, 8254 Basadingen (CH)

(56) Entgegenhaltungen:
- EP-A1- 0 129 085
- EP-A1- 0 154 660
- EP-A1- 1 469 242
- DE-A1- 19 926 043
- DE-A1- 19 926 867
- DE-C1- 19 709 736
- DE-U1-202004 002 987
- DE-U1-202009 003 010
- US-A- 3 026 742
- US-A- 4 815 693
- US-A- 5 887 850

## Beschreibung

Die vorliegende Erfindung bezieht sich auf eine Betätigungsvorrichtung zur Betätigung von Ventilen mit einer Spindel, wobei die Betätigungsvorrichtung als Handrad mit einem Verriegelungselement und einer vorzugsweise elektrischen Rückmeldevorrichtung ausgebildet ist:

Im Rohrleitungsbau werden Ventile eingesetzt um Förderströme unterschiedlicher Medien zu regeln. Ventile, die mit Handrädern als Betätigungsvorrichtungen ausgebildet sind, müssen mittels Verriegelungselemente gegen unbefugte Betätigung geschützt werden.

Die US 3 026 742 offenbar ein Handrad, welches durch einen Bügel vor dem Abziehen oder Abfallen gesichert ist. Die DE 199 26 867 A1 offenbart eine Drehsicherung, die ein Drehen nur zulässt, wenn das Sicherungselement in die entsprechende Position gedrückt wird. Die EP 1 469 242 A1 offenbart einen Handgriff, der sich ebenfalls nur durch ein aktives Drücken des Sicherungselementes radial bewegen lässt und zur axialen Fixierung ist der Griff durch eine Schraube festgeschraubt.

Ausgehend von diesem Stand der Technik ist es Aufgabe der Erfindung, eine Betätigungsvorrichtung anzugeben, die möglichst sicher arbeitet und möglichst einfach hergestellt werden kann.

Diese Aufgabe wird gelöst durch eine Betätigungsvorrichtung gemäß Anspruch 1.

Bevorzugte Weiterbildungen der Erfindung ergeben sich aus den abhängigen Ansprüchen.

Es ist vorgesehen, dass das Ventil nicht von Unbefugten betätigt werden kann. Dies wird dadurch erreicht, dass im Handrad zusammenwirkend mit der Spindel ein einstückiges Verriegelungselement integral angeordnet ist. Das Verriegelungselement ist zur Festlegung der axialen und der radialen Position des Handrades in Bezug auf die Spindel ausgebildet. Das Verriegelungselement weist mindestens einen senkrecht zur Spindelachse ausgebildeten federnden Finger zur Festlegung der axialen Position des Handrades in Bezug auf die Spindel auf und weist einen parallel zur Spindelachse ausgebildeten Schieber zur Festlegung der radialen Position des Handrades in Bezug auf die Spindel auf.

Ein Ausführungsbeispiel der Erfindung wird anhand der Figuren beschrieben. Es zeigen:
Figur 1 eine perspektivische Sicht auf ein Ventil mit der erfindungsgemässen Betätigungsvorrichtung,
Figur 2 eine perspektivische Sicht auf der als Handrad ausgebildeten Betätigungsvorrichtung,
Figur 3 eine perspektivische Sicht auf dem Verriegelungselement und auf dem Gehäuseoberteil des Ventils in einer ersten Endstellung des Verriegelungselements,
Figur 4 eine perspektivische Sicht auf dem Verriegelungselement und auf dem Gehäuseoberteil des Ventils in einer zweiten Endstellung des Verriegelungselements,
Figur 5 eine perspektivische Sicht auf dem Verriegelungselement und auf der Spindel des Ventils in der ersten Endstellung,
Figur 6 eine perspektivische Sicht auf dem Verriegelungselement und auf der Spindel des Ventils in der zweiten Endstellung,
Figur 7 eine perspektivische Sicht auf eine elektrische Rückmeldevorrichtung und
Figur 8 eine Sicht auf die elektrische Rückmeldevorrichtung von Figur 7.

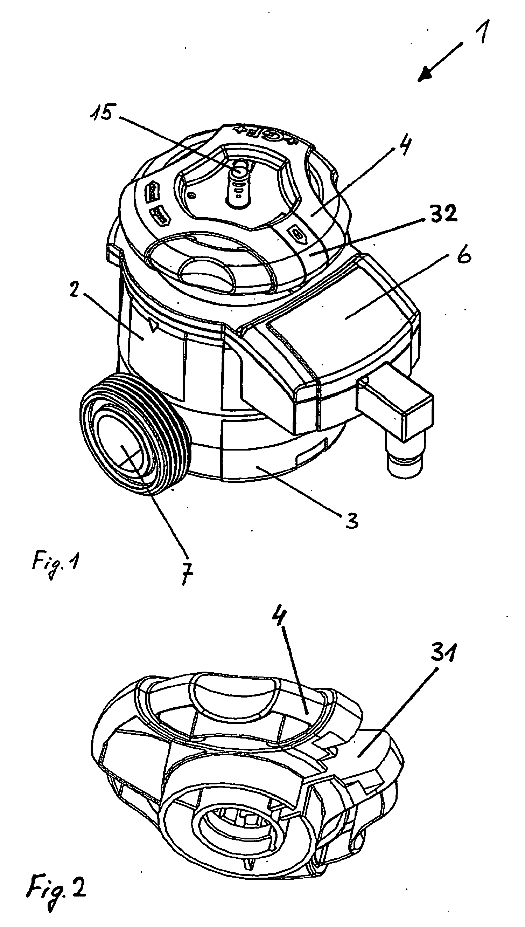

In Figur 1 ist ein Ventil 1, beispielsweise ein Membranventil, perspektivisch dargestellt. Das Ventil 1 besteht aus einem Gehäuseoberteil 2, einem dazu passenden Gehäuseunterteil 3, ein Betätigungsorgan, hier dargestellt als Handrad 4 mit einem Verriegelungselement 32, einer Verlängerung 15 einer Spindel 5 und einer elektrischen Rückmeldevorrichtung 6. Das Gehäuseunterteil 3 weist drei Öffnungen auf, von denen in Figur 1 nur ein Rohrverbindungsstutzen 7 ersichtlich ist.

In Figur 2 ist das Handrad 4 perspektivisch dargestellt. Das Handrad 4 weist eine radial ausgebildete Aussparung 31 auf, in die das Verriegelungselement 32 radial verschiebbar aufgenommen werden kann.

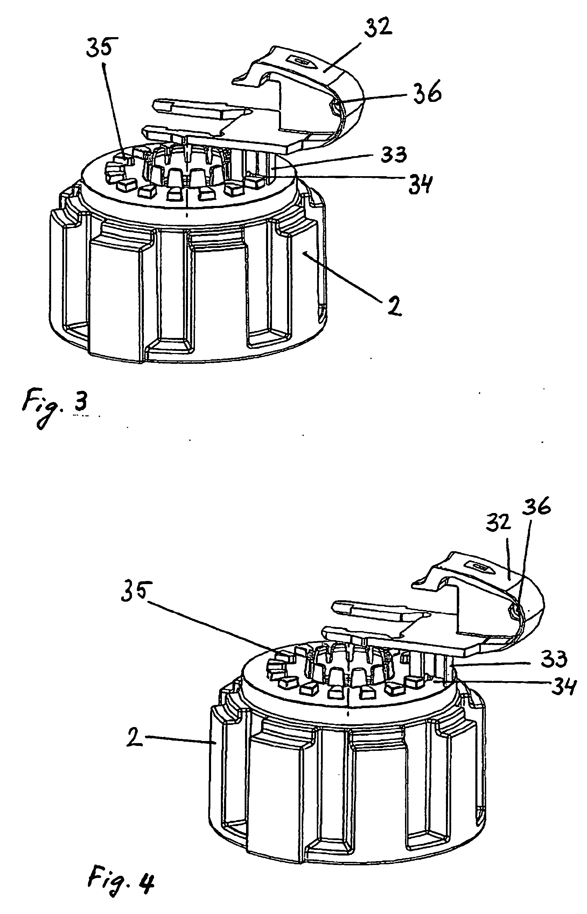

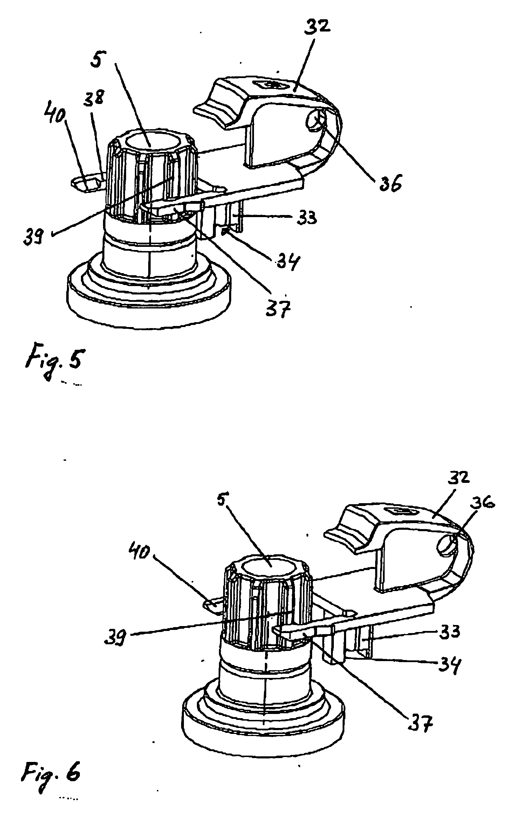

Das Verriegelungselement 32 ist in den Figuren 3 und 4 zusammenwirkend mit dem Gehäuseoberteil 2 und in den Figuren 5 und 6 zusammenwirkend mit der Spindel 5 dargestellt. Das Verriegelungselement 32 weist einen Schieber 33 auf, der sich als eine senkrecht angeordnete und radial verschiebbare Platte vom Verriegelungselement 32 bis zur Oberseite des Gehäuseoberteils 2 erstreckt.

In Figur 3 ist der Schieber 33 in dem zur Spindelachse radial eingeschobenen Zustand, d.h. in dem normalen Betriebszustand des Ventils 1 dargestellt. Der Schieber 33 weist eine Durchlassöffnung 34 auf, durch die die Nocken 35, die auf der Oberseite des Gehäuseoberteils 2 ausgebildet sind, bei der Drehbewegung des Handrades4 durchgelassen werden. In der Stellung von Figur 3 kann das Ventil 1 mit dem Handrad 4 betätigt werden.

In Figur 4 ist der Schieber 33 im radial ausgeschobenen Zustand dargestellt. In dieser Stellung ist die radiale Position des Handrades 4 festgelegt. Das Handrad 4 kann indieserStellung nicht betätigt und die Spindel 5 kann in dieser Stellung nicht gedreht werden. Um das Ventil in der verriegelten Stellung zu fixieren, weist das Verriegelungselement 32 eine Bohrung 36 auf, in die ein hier nicht dargestelltes Vorhängeschloss oder eine andere dazu passende Sicherung eingebracht werden kann. Eine unbefugte Betätigung des Ventils 1 wird verhindert.

Das Verriegelungselement 32 weist, wie in den Figuren 5 und 6 dargestellt, weiterhin zwei federnde Finger 37, 38 auf, die zusammenwirkend mit der Spindel 5 ausgebildet sind. Die federnde Finger 37, 38 greifen ein in weiteren Nocken 39, die am Umfang der Spindel 5 ausgebildet sind. Die federnde Finger 37, 38 verhindern ein unberechtigtes Entfernen des Handrades 4 von der Spindel 5. Die axiale Position des Handrades 4 in Bezug auf die Spindel 5 ist festgelegt. Das Abziehen des Handrades 4 ist nur möglich, wenn das Verriegelungselement 32 sich im normalen Betriebszustand, wie in Figur 5 dargestellt, befindet. Nur mit einem Spezialwerkzeug können die federnde Finger 37, 38 nach Aussen von der Spindel 5 weg bewegt werden, so dass ein Abziehen des Handrades 4 von der Spindel 5 möglich wird. Die federnden Finger 37,38 weisen hierzu schräge Flächen 40 auf, die vom Spezialwerkzeug nach Aussen gedrückt werden können. In Figur 6 ist ersichtlich, wie das Ende des federnden Fingers 37 in einer Aussparung am Nocken 39 der Spindel 5 eingreift, so dass in dieser Betriebstellung ein Abziehen des Handrades 4 verhindert wird. Mit dem hier beschriebenen Handrad 4 mit dem Verriegelungselement 32 kann mit einem einzelnen Bauteil eine vollständige Sicherung des Handrades 4 sowohl in radialer als auch in axialer Richtung erreicht werden.

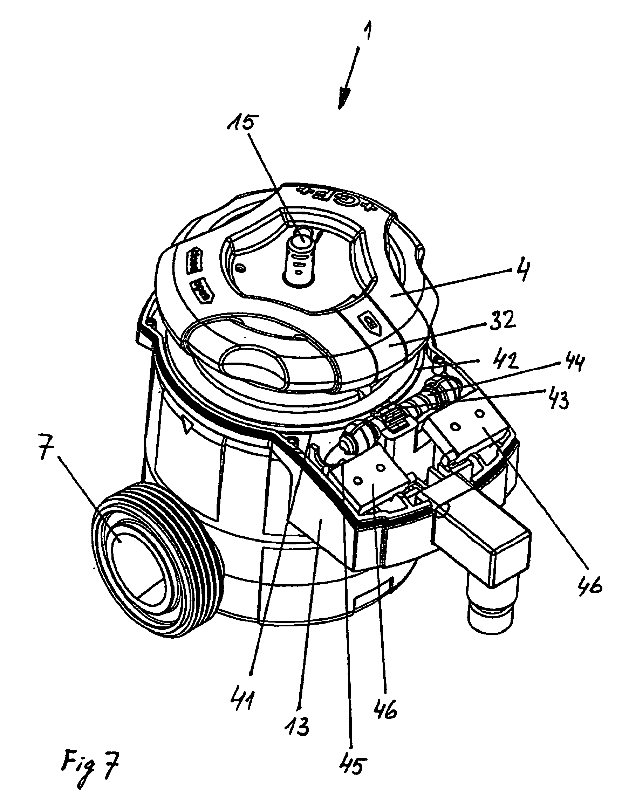

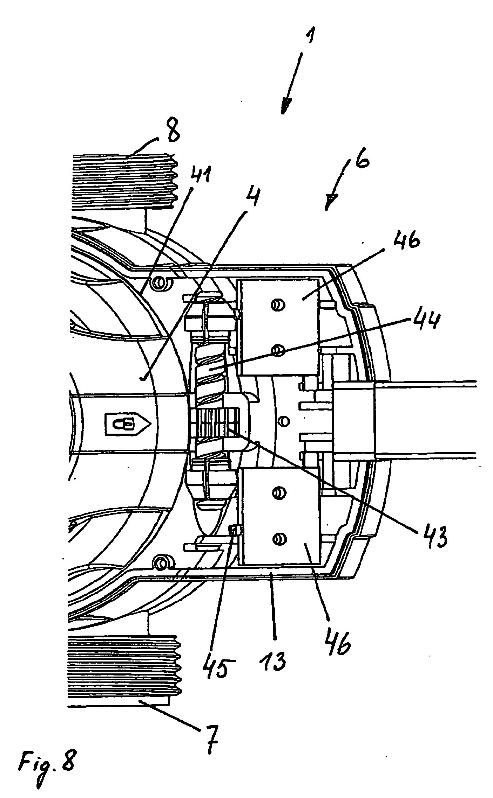

In den Figuren 7 und 8 ist die elektrische Rückmeldevorrichtung 6 zur Rückmeldung der Stellung des Handrades 4 und somit der Stellung des Absperrgliedes des Ventils 1 dargestellt. Die elektrische Rückmeldevorrichtung 6 ist im Spindelgehäuse 13 des Gehäuseoberteils 2 des Ventils 1 angeordnet. Im Gehäuseoberteil 2 ist ein mit der Spindel 5 verbundenen Ring 41 mit einem an dem Ringrand ausgebildeten Schraubengewinde 42 angeordnet. Das Schraubengewinde 42 wirkt über ein Zahnrad 43 zusammen mit einem Schneckenradgetriebe 44. Das Schneckenradgetriebe 44 treibt zwei Schaltnocken 45 an, die eine Linearbewegung ausführen. Hiermit wird erreicht, dass die Drehbewegung des Handrades 4 in einer Linearbewegung der Schaltnocken 45 umgewandelt wird. Die Schaltnocken 45 wirken zusammen mit Mikroschaltern 46, die elektrische Impulse an eine hier nicht dargestellte Stellungsanzeige senden können.

## Patentansprüche

1. Betätigungsvorrichtung (4) zur Betätigung von Ventilen (1) mit einer Spindel (5), wobei die Betätigungsvorrichtung als Handrad (4) mit einem Verriegelungselement (32) ausgebildet ist, wobei das Verriegelungselement (32) integral im Handrad (4) angeordnet ist, **dadurch gekennzeichnet, dass** das einstückig ausgebildete Verriegelungselement (32) das Handrad (4) in radialer und axialer Richtung sichert, wobei es mindestens einen senkrecht zur Spindelachse ausgebildeten federnden Finger (37,38) zur Festlegung der axialen Position des Handrades (4) in Bezug auf die Spindel (5) sowie einen parallel zur Spindelachse ausgebildeten Schieber (33) zur Festlegung der radialen Position des Handrades (4) in Bezug auf die Spindel (5) aufweist.

2. Betätigungsvorrichtung nach Anspruch 1, **dadurch gekennzeichnet, dass** das Handrad (4) und das Verriegelungselement (32) derart ausgebildet sind, dass ein Abziehen des Handrades (4) nur möglich ist, wenn das Verriegelungselement (32) in einer radial benachbarten Position zur Spindel (5) angeordnet ist.

3. Betätigungsvorrichtung nach einem der vorhergehenden Ansprüche, **dadurch gekennzeichnet, dass** das Handrad (4) als nichtsteigendes Handrad ausgebildet ist.

4. Betätigungsvorrichtung nach einem der vorhergehenden Ansprüche, **dadurch gekennzeichnet, dass** im Spindelgehäuse (13) des Ventils (1) eine elektrische Rückmeldevorrichtung (6) angeordnet ist.

5. Betätigungsvorrichtung nach einem der vorhergehenden Ansprüche, **dadurch gekennzeichnet, dass** die elektrische Rückmeldevorrichtung (6) Mikroschalter (46) aufweist, die von linear beweglich angeordneten Schaltnocken (45) betätigt werden.

6. Betätigungsvorrichtung nach einem der vorhergehenden Ansprüche, **dadurch gekennzeichnet, dass** das Handrad (4) einen Ring (41) mit einer Schraubenlinienkontur (42) aufweist, die mit einem Schneckenradgetriebe (44) derart zusammenwirkend angeordnet ist, dass die Drehbewegung des Handrades (4) in eine Linearbewegung der Schaltnocken (45) umgesetzt wird.

7. Betätigungsvorrichtung nach einem der vorhergehenden Ansprüche, **dadurch gekennzeichnet, dass** die elektrische Rückmeldevorrichtung (6) selbstjustierend und nachträglich montierbar ausgebildet ist.

## Claims

1. Actuating device (4) for actuating valves (1) having a spindle (5), wherein the actuating device is formed as a hand wheel (4) having a locking element (32), wherein the locking element (32) is arranged integrally in the hand wheel (4), **characterized in that** the locking element (32) which is formed in one piece secures the hand wheel (4) in the radial and axial direction, wherein it has at least one resilient finger (37, 38), formed perpendicularly to the spindle axis, in order to fix the axial position of the hand wheel (4) with respect to the spindle (5) as well as a slide (33), formed parallel to the spindle axis, in order to fix the radial position of the hand wheel (4) with respect to the spindle (5).

2. Actuating device according to Claim 1, **characterized in that** the hand wheel (4) and the locking element (32) are formed such that it is only possible to pull off the hand wheel (4) when the locking element (32) is arranged in a position radially adjacent to the spindle (5).

3. Actuating device according to either of the preceding claims, **characterized in that** the hand wheel (4) is formed as a non-rising hand wheel.

4. Actuating device according to one of the preceding claims, **characterized in that** an electric feedback device (6) is arranged in the spindle housing (13) of the valve (1).

5. Actuating device according to one of the preceding claims, **characterized in that** the electric feedback device (6) has microswitches (46), which are actuated by switching cams (45) arranged in a linearly moveable manner.

6. Actuating device according to one of the preceding claims, **characterized in that** the hand wheel (4) has a ring (41) having a helical contour (42), which is arranged in a manner interacting with a worm gear mechanism (44) such that the rotational movement of the hand wheel (4) is converted into a linear movement of the switching cams (45).

7. Actuating device according to one of the preceding claims, **characterized in that** the electric feedback device (6) is formed in a self-adjusting manner and such that it can be retrofitted.

## Revendications

1. Dispositif d'actionnement (4) destiné à l'actionnement de soupapes (1) avec une broche (5), dans lequel le dispositif d'actionnement est réalisé sous la forme d'une roue manuelle (4) avec un élément de verrouillage (32), dans lequel l'élément de verrouillage (32) est disposé de façon intégrée dans la roue manuelle (4), **caractérisé en ce que** l'élément de verrouillage (32) réalisé en une seule pièce bloque la roue manuelle (4) dans les directions radiale et axiale, celui-ci présentant au moins un doigt élastique (37, 38), réalisé perpendiculairement à l'axe de la broche, pour la fixation de la position axiale de la roue manuelle (4) par rapport à la broche (5), ainsi qu'un curseur (33), réalisé parallèlement à l'axe de la broche, pour la fixation de la position radiale de la roue manuelle (4) par rapport à la broche (5).

2. Dispositif d'actionnement selon la revendication 1, **caractérisé en ce que** la roue manuelle (4) et l'élément de verrouillage (32) sont réalisés de telle manière que la roue manuelle (4) ne peut être enlevée que lorsque l'élément de verrouillage (32) est disposé dans une position radialement proche de la broche (5).

3. Dispositif d'actionnement selon l'une quelconque des revendications précédentes, **caractérisé en ce que** la roue manuelle (4) est réalisée sous la forme d'une roue manuelle non ascendante.

4. Dispositif d'actionnement selon l'une quelconque des revendications précédentes, **caractérisé en ce qu'**un dispositif de réponse électrique (6) est disposé dans le boîtier de broche (13) de la soupape (1).

5. Dispositif d'actionnement selon l'une quelconque des revendications précédentes, **caractérisé en ce que** le dispositif de réponse électrique (6) présente des micro-interrupteurs (46), qui sont actionnés par des cames de commutation (45) disposées de façon linéairement mobile.

6. Dispositif d'actionnement selon l'une quelconque des revendications précédentes, **caractérisé en ce que** la roue manuelle (4) présente une bague (41) avec un contour en forme de vis (42), qui est disposée en coopération avec un mécanisme de roue à vis sans fin (44), de telle manière que le mouvement de rotation de la roue manuelle (4) soit converti en un mouvement linéaire des cames de commutation (45).

7. Dispositif d'actionnement selon l'une quelconque des revendications précédentes, **caractérisé en ce que** le dispositif de réponse électrique (6) est réalisé avec ajustage automatique et de façon à pouvoir être monté ultérieurement.
